# FASCICULE DE BREVET EUROPEEN

(11) **EP 0 838 876 B1**
(45) Date de publication et mention de la délivrance du brevet: **03.09.2003**
(21) Numéro de dépôt: 97402471.3
(22) Date de dépôt: 20.10.1997
(51) Int. Cl.: H01Q 3/02, H01Q 3/06, H01Q 1/12

(54) **Dispositif de réception par satellite comportant une antenne plane**
Anordnung für Satellitenempfang mit einer planaren Antennengruppe
Apparatus for satellite reception including a planar antenna

(30) Priorité: 22.10.1996 FR 9612808
(43) Date de publication de la demande: 29.04.1998
(73) Titulaire: AGENCE SPATIALE EUROPEENNE, F-75738 Paris Cedex 15 (FR)
(72) Inventeur: Rammos, Emmanuel, 2341 NJ Oegstgeest (NL)
(74) Mandataire: Jacquard, Philippe Jean-Luc

(56) Documents cités:
- GB-A- 2 295 493
- US-A- 5 355 145
- US-A- 5 359 337

## Description

La présente invention a pour objet un dispositif de réception de signaux, notamment de télévision, par satellite et comportant une antenne plane.

Il est connu de réaliser un balayage de faisceau à l'aide d'antennes paraboliques commandées mécaniquement avec des moteurs associés pour la rotation de la totalité de l'antenne. Il s'agit cependant d'une solution de mise en oeuvre difficile en raison du volume important du réflecteur et des mécanismes de balayage. Les moteurs, qui sont en général des actionneurs linéaires, sont placés à l'arrière de l'antenne et prennent une place importante qui augmente considérablement tant la profondeur que le volume de l'ensemble constitué par le réflecteur et ses dispositifs d'actionnement.

En outre, étant donné que le réflecteur et son alimentation présentent une résistance élevée au vent, le moteur se doit d'être très puissant et doit procurer une rigidité suffisante à la fois pour assurer la rotation de l'antenne ainsi que sa position précise. La conséquence de ceci est que le moteur est compliqué, cher, encombrant et nécessite des niveaux de courant appropriés à sa commande.

D'autres dispositifs, par exemple ceux proposés dans la demande de Brevet britannique GB 2 295 493 (JAPAN RADIO) et dans le Brevet des Etats-Unis US 5 359 337 (JAPAN RADIO) présentent un boîtier englobant une antenne plane, mais ceux-ci sont volumineux et lourds.

L'idée de base de l'invention est de mettre en oeuvre un dispositif de réception associé à un moteur ou à un mécanisme, qui soit plat et qui présente un faible poids.

L'invention concerne ainsi un dispositif de réception par satellite comportant une antenne plane présentant au moins un axe de rotation disposé dans un plan de l'antenne, un support de fixation, un dispositif d'entraînement lié fonctionnellement au support de fixation et à l'antenne pour faire pivoter celle-ci autour de son ou ses axes de rotation ainsi qu'un boîtier à l'intérieur duquel est disposée l'antenne plane. Ce boîtier permet de protéger la partie mobile de l'antenne de l'action du vent.

Le dispositif selon l'invention est caractérisé en ce que la boîtier est fermé et présente une surface qui peut être concave vers l'extérieur du boîtier, et qui présente une première et une deuxième régions qui sont adjacentes à une première et à une deuxième régions de l'antenne plane lorsque celle-ci est disposée respectivement selon une première et une deuxième directions angulaires extrêmes.

Le boîtier présente avantageusement au moins une surface transparente aux radiations radiofréquence.

L'antenne plane peut présenter une forme de quadrilatère, par exemple il peut s'agir d'une antenne carrée, et l'axe de rotation peut être disposé selon l'une des diagonales de ce quadrilatère.

Un deuxième axe de rotation, par exemple perpendiculaire au précédent, peut permettre la rotation en Azimuth (Az)-Elévation (El). Un troisième axe de rotation peut permettre la rotation de polarisation.

Le dispositif d'entraînement peut comporter un vérin.

Selon un mode de réalisation préféré, le dispositif d'entraînement peut comporter un mécanisme à engrenages à rotation. Ce mécanisme peut être composé de deux moteurs pour une orientation (Az)-(El).

Selon une première variante, le dispositif d'entraînement comporte un moteur produisant un déplacement continu de l'antenne.

Selon une deuxième variante préférée, le dispositif d'entraînement comporte un mécanisme assurant une pluralité d'orientations prédéterminées de l'antenne (réglage pas à pas).

D'autres caractéristiques et avantages de l'invention apparaîtront mieux à la lecture de la description qui va suivre, donnés à titre d'exemple non limitatifs en liaison avec les dessins dans lesquels :
- la figure 1 représente une vue en coupe d'un dispositif de réception selon un mode de réalisation de l'invention ;
- la figure 2 représente l'antenne plane de la figure 1 et son mécanisme d'entraînement vu par la face arrière de ladite antenne ;
- et la figure 3 représente une variante dans laquelle le dispositif d'entraînement présente un moteur d'entraînement à engrenage.

Sur les figures, on voit que l'antenne plane 1, par exemple de contour carré, présentant des bords 11, est susceptible de pivoter autour d'un axe 2, par exemple une diagonale du carré, sous l'action d'un dispositif d'entraînement comportant un moteur 3, un corps de vérin 4 et une tige de vérin linéaire 5. Le moteur 3 est fixé en 6 au fond 21 d'un boîtier 20 à l'aide d'une liaison permettant un degré de liberté de rotation parallèlement à l'axe 2. L'extrémité du vérin 5 est fixée à la face arrière 14 de l'antenne 1 par une liaison 8 disposée en un point espacé de l'axe de rotation 2. La liaison 8 permet un débattement en rotation parallèlement à l'axe de rotation 2 de l'antenne 1.

Il est ainsi possible en faisant sortir ou rentrer la tige de vérin 5 sous l'action du moteur 3 de faire tourner l'antenne autour de l'axe 2.

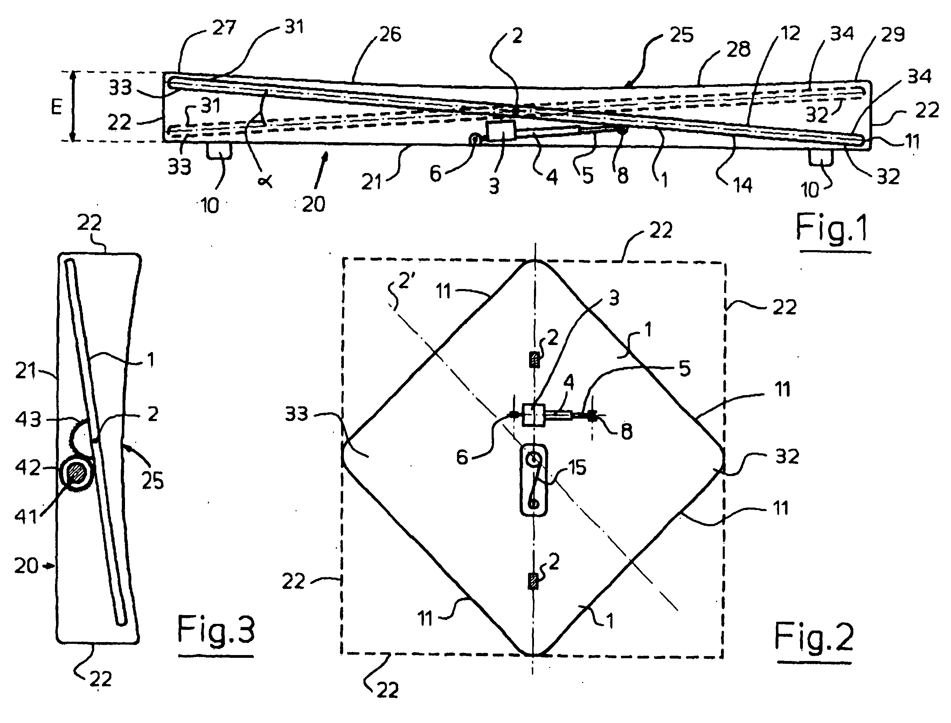

Le boîtier 20 présente un corps 22 entourant l'antenne 2 et dont le contour est représenté en pointillés à la figure 2. Le boîtier est refermé par une paroi 25 permettant de constituer un radôme transparent aux radiations radiofréquence. Cette paroi 25 peut présenter un contour dont la concavité est dirigée vers l'extérieur du boîtier, c'est-à-dire en direction des satellites que l'antenne 1 est destinée à recevoir, pour améliorer l'esthétique de l'antenne.

Le dispositif d'entraînement permet à l'antenne un débattement angulaire α. Dans une première position représentée en traits pleins à la figure 1, le bord 31 de la face supérieure 12 de l'antenne vient à proximité immédiate de la région d'extrémité 27 de la paroi 25 alors que l'extrémité 32 de la paroi inférieure 14 de l'antenne vient à proximité du fond 21.

Symétriquement, dans l'autre position extrême représentée en pointillés à la figure 1, c'est l'extrémité 33 de la face inférieure 14 de l'antenne 1 qui est à proximité du fond 21, l'extrémité 34 de la face antérieure 12 de l'antenne 1 venant jouxter la région 29 du bord 25.

Le boîtier 20 forme un châssis qui peut être fixé sur un mur avec un angle approprié, par exemple selon un axe polaire modifié, à l'aide d'un support de fixation 10. Le support de fixation peut être placé au centre de l'antenne ou près de l'un ou l'autre bord seulement.

Il existe des antennes planes destinées à la réception de télévision ou radio par satellite qui peuvent recevoir un faisceau selon une ou deux polarisations. Ces antennes comportent un réseau de radiateurs constituant l'antenne proprement dite, protégé par un « couvercle » transparent aux radiations radiofréquence.

L'antenne plane 1 est montée avec son axe de rotation en position appropriée, par exemple selon un axe polaire modifié.. Cet axe de rotation est parallèle à la base du fond 21 du boîtier 20. Il peut s'agir d'un axe diagonal 2 ou bien d'un axe 2' parallèle aux côtés 11.

Dans une version simplifiée, convenant par exemple à l'orientation de l'antenne suivant deux positions pour recevoir deux satellites, le moteur 3 peut être remplacé par un simple mécanisme commutable à deux positions utilisant par exemple des électroaimants, ce qui permet de positionner l'antenne plane 1 sur deux butées de fin de course.

Il est également possible de mettre en oeuvre des mécanismes présentant un plus grand nombre de positions fixées à l'avance.

Etant donné qu'à la fois l'antenne plane 1 et le mécanisme d'entraînement 3, 4, 5 sont montés à l'intérieur du boîtier 20 formant radôme, ils sont protégés à la fois de l'environnement et des effets du vent. Etant donné que l'antenne plane rotative ne présente alors plus de résistance au vent et ne nécessite pas non plus de protection spéciale, le mécanisme n'a pas besoin d'être très puissant ni très rigide et il peut par conséquent être plus simple de plus faible coût et nécessiter moins de puissance ou de courant pour l'alimenter. En outre, l'électronique 15 (récepteur à faible bruit) bénéficie d'une protection supplémentaire du fait qu'elle peut être disposée à l'intérieur du boîtier ou châssis 20.

L'aspect extérieur du dispositif est celui d'une antenne plane d'épaisseur E qui est fixée sur un mur. L'angle de débattement pour le balayage est fonction de l'épaisseur externe E qui ne sera en général pas supérieure à approximativement 10% de la taille de l'antenne pour les applications typiques en Europe.

Le dispositif de réception ainsi formé présente un minimum de contraintes mécaniques puisqu'il n'est pas nécessaire de protéger les parties mobiles contre les vents forts.

Le récepteur à faible bruit 15 est monté sur la face arrière 14 de l'antenne plane 1 et se déplace en général avec celle-ci. Le câble d'interface peut être disposé à l'intérieur du boîtier ou châssis 20 et un câble flexible de liaison vers l'extérieur du châssis peut être disposé de manière à passer par une ouverture du châssis 20. On peut prévoir un autre type d'interface en rotation, par exemple un joint coaxial en rotation. On notera que le boîtier 20 n'est pas nécessairement hermétiquement fermé.

Le châssis 20 et l'antenne 1 peuvent être disposés avec leur axe de rotation approprié, par exemple selon un axe polaire modifié, que ce soit comme représenté en mode diagonal (axe 2), ou bien en mode dit normal (axe de rotation 2'). Dans le mode représenté, et pour une antenne plane 1 de 45 cm de côté, la dimension maximale horizontale, c'est-à-dire la diagonale, est de l'ordre de 64 cm.

Pour recevoir EUTELSAT à 13E et ASTRA à 19,2E, le faisceau et donc l'antenne plane 1, doivent par exemple subir une rotation d'environ ± 3,4° autour de la position centrale (α = 6,8), cette position centrale étant la position qui est choisie pour l'orientation externe du châssis 20. De ce fait, les bords 31, 32, 33 et 34 de la diagonale horizontale se déplacent approximativement de ± 2 cm, ce qui donne une épaisseur totale E du châssis 20 d'environ 4 cm. Si l'antenne plane 1 présente une épaisseur d'environ 1 cm, une épaisseur totale de l'ordre de 5 à 6 cm est suffisante. Le radôme frontal 25 peut être incurvé en présentant sa concavité vers l'extérieur, ou présenter deux faces planes 26 et 28 faisant entre elles un angle adapté au débattement angulaire α souhaité. En supposant que la figure 2 représente l'antenne montée avec l'axe de rotation 2 polaire, on peut choisir de disposer le circuit 15 à la partie inférieure du châssis et le mécanisme de commande à la partie supérieure de celui-ci.

En pratique, la paroi 25 formant radôme n'a qu'une influence négligeable sur les propriétés de l'antenne, si le matériau est bien choisi.

La fabrication de l'antenne plane selon l'invention peut être- basée sur le même procédé que l'antenne plane fixe de l'art antérieur. Les dimensions du radôme frontal de l'antenne sont adaptées aux contraintes dues à la rotation du réseau.

Il est intéressant de noter que les antennes planes présentent une largeur de faisceau à mi-puissance qui est plus étroite que celle des paraboles de diamètre égal, ceci étant dû à la distribution d'amplitude uniforme qui est généralement mise en oeuvre dans les antennes planes. Ceci apporte une meilleure réjection des interférences pour des satellites faiblement espacés et pour lesquels avec des antennes de petites dimensions, il peut exister des interférences même à l'intérieur du lobe principal. Par exemple, une antenne plane de 45 cm de côté présente une largeur de faisceau de 2,8° à 12 Ghz alors qu'une antenne parabolique de 60 cm de diamètre présente une largeur de faisceau de 2,9°. Une antenne parabolique de diamètre 45° présente une largeur de faisceau d'environ 3,9°.

On notera enfin un avantage de la présente invention en ce sens que la rotation de l'antenne 1 n'introduit pas lors de son déplacement de phénomènes de défocalisation que l'on rencontrerait avec une antenne parabolique à plusieurs têtes de réception.

L'antenne plane 1 peut être par exemple telle que décrite dans le Brevet Européen EP-252 779 déposé le 4 Juin 1987.

La figure 3 représente une variante de réalisation dans laquelle le mécanisme de pointage 40, par exemple à deux axes, présente un moteur 41 présentant un engrenage menant 42, et dans lequel l'antenne présente un engrenage mené 43, du type de ceux que l'on peut trouver dans des rétroviseurs d'automobile à télécommande.

## Revendications

1. Dispositif de réception par satellite comportant une antenne plane, présentant au moins un axe de rotation (2,2') disposé dans un plan de l'antenne, un support de fixation, un dispositif d'entraînement (3, 4, 5) lié fonctionnellement au support de fixation et à l'antenne pour faire pivoter celle-ci autour d'au moins un dit axe de rotation (2,2') ainsi qu' un boîtier (20) à l'intérieur duquel est disposée l'antenne plane (1), **caractérisé en ce que** ledit boîtier est fermé et présente une surface (25) qui présente une première (27) et une deuxième régions (29) qui sont adjacentes à une première (31) et une deuxième (34) régions de l'antenne (1) plane lorsque celle-ci est disposée respectivement selon une première et une deuxième directions angulaires extrêmes.

2. Dispositif selon la revendication 1, **caractérisé en ce que** le boîtier (20) comporte au moins une surface (25) transparente aux radiations radiofréquence.

3. Dispositif selon une des revendications précédentes, **caractérisé en ce que** l'antenne plane (1) présente une forme de quadrilatère.

4. Dispositif selon la revendication 3, **caractérisé en ce que** l'axe de rotation (2) est disposé selon l'une des diagonales de ce quadrilatère.

5. Dispositif selon une des revendications précédentes, **caractérisé en ce que** le dispositif d'entraînement comporte un vérin (3, 4, 5).

6. Dispositif selon une des revendications précédentes, **caractérisé en ce que** le dispositif d'entraînement comporte un moteur d'entraînement (41) à engrenage.

7. Dispositif selon une des revendications précédentes, **caractérisé en ce que** le dispositif d'entraînement comporte un moteur (3) produisant un déplacement continu.

8. Dispositif selon une des revendications 1 à 5, **caractérisé en ce que** le dispositif d'entraînement comporte un mécanisme assurant une pluralité d'orientations prédéterminées de l'antenne (1).

9. Dispositif selon la revendication 8, **caractérisé en ce que** ledit mécanisme est commutable entre deux positions stables.

10. Dispositif selon une des revendications précédentes, **caractérisé en ce que** l'antenne plane et le dispositif d'entraînement sont montés à l'intérieur du boîtier.

11. Dispositif selon une des revendications précédentes, **caractérisé en ce que** la dite surface (25) est concave vers l'extérieur du boîtier (20).

## Patentansprüche

1. Satellitenetnpfangsvorrichtung, die eine planare Antenne mit wenigstens einer in einer Ebene der Antenne angeordneten Drehachse (2,2'), eine Befestigungsstütze, eine Mitnahmevorrichtung (3, 4, 5), die funktionell mit der Befestigungsstütze und der Antenne verbunden ist, um die Antenne um wenigstens eine Drehachse (2, 2') drehen zu lassen, sowie ein Gehäuse (20), in dessen Innerem die planare Antenne (1) angeordnet ist, aufweist, **dadurch gekennzeichnet, dass** das Gehäuse geschlossen ist und eine Oberfläche (25) aufweist, die einen ersten (27) und einen zweiten (29) Bereich aufweist, die an einen ersten (31) und an einen zweiten (34) Bereich der Antenne (1) angrenzen, wenn die Antenne gemäß einer ersten bzw. einer zweiten maximalen Winkelorientierung angeordnet ist.

2. Vorrichtung nach Anspruch 1, **dadurch gekennzeichnet, dass** das Gehäuse (20) wenigstens eine für Hochfrequenzstrahlen durchlässige Oberfläche (25) aufweist.

3. Vorrichtung nach einem der vorstehenden Ansprüche, **dadurch gekennzeichnet, dass** die planare Antenne (1) eine viereckige Form aufweist.

4. Vorrichtung nach Anspruch. 3, **dadurch gekennzeichnet, dass** die Drehachse (2) entlang einer der Diagonalen dieses Vierecks angeordnet ist.

5. Vorrichtung nach einem der vorstehenden Ansprüche, **dadurch gekennzeichnet, dass** die Mitnahmevorrichtung einen Stellantrieb (3, 4, 5) umfasst.

6. Vorrichtung nach einem der vorstehenden Ansprüche, **dadurch gekennzeichnet, dass** die Mitnahmevorrichtung einen Antriebsmotor (41) mit Übersetzung umfasst.

7. Vorrichtung nach einem der vorstehenden Ansprüche, **dadurch gekennzeichnet, dass** die Mitnahmevorrichtung einen Motor (3) aufweist, der eine stetige Verschiebung erzeugt.

8. Vorrichtung nach einem der Ansprüche 1 bis 5, **dadurch gekennzeichnet, dass** die Mitnahmevorrichtung eine Vorrichtung umfasst, die mehrere vorbestimmte Orientierungen der Antenne (1) gewährleistet.

9. Vorrichtung nach Anspruch 8, **dadurch gekennzeichnet, dass** die Vorrichtung zwischen zwei stabilen Positionen schaltbar ist.

10. Vorrichtung nach einem der vorstehenden Ansprüche, **dadurch gekennzeichnet, dass** die planare Antenne und die Mitnahmevorrichtung im Inneren des Gehäuses angebracht sind.

11. Vorrichtung nach einem der vorstehenden Ansprüche, **dadurch gekennzeichnet, dass** die Oberfläche (25) nach außen von dem Gehäuse (20) konkav ist.

## Claims

1. Satellite receiving device containing a flat antenna, affording at least one rotation axis (2,2') located in one antenna plane, a securing support, a drive device (3, 4, 5) functionally connected to the securing support and to the antenna to allow the latter to pivot around at least one such rotation axis (2,2') together with a box (20) inside of which the flat antenna (1) is located, **characterised by** the fact that the said box is closed and affords a surface (25) which affords a first (27) and a second region (29) which are adjacent to a first (31) and a second (34) region of the flat antenna (1) when the latter is positioned respectively in accordance with a first and a second extreme angular direction.

2. Devices in accordance with claim 1, **characterised by** the fact that the box (20) contains at least one transparent surface (25) for radio frequency radiation.

3. Device in accordance with one of the aforesaid claims, **characterised by** the fact that the flat antenna (1) takes the form of a quadrilateral.

4. Device in accordance with claim 3, **characterised by** the fact that the rotation axis (2) is positioned in accordance with one of the diagonals of this quadrilateral.

5. Device in accordance with one of the aforesaid claims, **characterised by** the fact that the drive device contains a jack (3, 4, 5).

6. Device in accordance with one of the aforesaid claims, **characterised by** the fact that the drive device contains a geared drive motor (41).

7. Device in accordance with one of the aforesaid claims, **characterised by** the fact that the drive device contains a motor (3) producing continuous displacement.

8. Device in accordance with one of the claims 1 to 5, **characterised by** the fact that the drive device contains a mechanism ensuring a plurality of pre-determined orientations of the antenna (1).

9. Device in accordance with claim 8, **characterised by** the fact that the said mechanism can be switched between two stable positions.

10. Device in accordance with one of the aforesaid claims, **characterised by** the fact that the flat antenna and the drive device are mounted inside the box.

11. Device in accordance with one of the aforesaid claims, **characterised by** the fact that the said surface (25) is concave towards the outside of the box (20).
